# EUROPEAN PATENT SPECIFICATION

(11) **EP 2 568 444 B1**
(45) Date of publication and mention of the grant of the patent: **01.11.2017**
(21) Application number: 11180916.6
(22) Date of filing: 12.09.2011
(51) Int. Cl.: G07D 7/12, G02B 3/00

(54) **Validation apparatus and light source module thereof**
Validierungsvorrichtung und Lichtquellenmodul dafür
Appareil de validation et son module de source lumineuse

(43) Date of publication of application: 13.03.2013
(73) Proprietor: International Currency Technologies Corporation, Taipei (TW)
(72) Inventor: Wu, Shih-Pin, Taipei City 114 (TW)
(74) Representative: Ter Meer Steinmeister & Partner

(56) References cited:
- WO-A1-2011/072862
- JP-A- 2000 138 796
- JP-A- 2006 058 488
- US-A1- 2008 273 255

## Description

### BACKGROUND OF THE INVENTION

### 1. Field of the Invention

The present invention relates to a light source module and a validation apparatus comprising the same, in particularly to a validation apparatus used for automatic vending ma-or automatic service machine.

### 2. Description of Related Art

Automatic vending machines or automatic service machines usually have validation apparatus for identifying user's valuable documents delivered into the automatic vending machines or the automatic service machines. Since plastic payment cards like credit cards are widely used in recent years, some automatic vending machines or automatic service machines can identify the plastic payment cards as well for avoiding credit card fraud.

For avoiding fraud, some security features are put on the credit cards or valuable documents. With these security features, credit cards or valuable documents can not be easily forged However, the validation apparatuses now used in the automatic vending machines do not have enough resolution to clearly identify those security features.

Conventional validation apparatus for identifying the valuable documents or plastic payment cards includes a light source module, which has a plurality of light emitting diodes arranged on a strip-shaped circuit board, and a lens array arranged over the strip-shaped circuit board.

The lens array has a plurality of lenses respectively facing the light emitting diodes. The lenses are used for converging the lights emitted from the light emitting diodes. Each of the lenses is a positive lens or a rod lens. Light emitted from each of the light emitting diodes is converged by the lens and then generates a circular shaped intensity distribution. The intensity distribution is symmetrical and has highest intensity in its center and gradually decreases outwardly. Besides, each light distribution generated by each of the light emitting diodes is partially overlapped with the adjacent light distribution from the adjacent light emitting diodes. However, the overall light intensity distribution generated by the light source module along its longitudinal direction is not a constant. Such a variation degrades the performance of identification.

In order to solve the above-mentioned problem, the conventional identifying device for identifying valuable documents or plastic payment cards has a lens for shaping light. The lens faces the light emitting diodes and shapes the light emitted from the light emitting diodes into a parallel light. However, in practical use, the resolution of the light delivering through the lens is seriously downgraded to 2 to 7mm. Thus, the performance of the image identification of the identifying device is lowered and most of the security features on the valuable documents can not be clearly identified.

US 2008/0273255 A1 discloses a light source module having a plurality of light emitting units arranged along a predetermined direction and emitting light. A lens array comprising a plurality of lens units and arranged along a second predetermined direction parallel to the first predetermined direction. The lens units respectively receive the light emitted from the light emitting units so as to provide parallel light beams directed to a detecting module comprising sensors. Each of the lens units comprises a conventional spherical or aspherical convex surface intersecting with the direction of the light emitted from each of the light emitting unit.

WO 2011/072862 A1 discloses a light source module having a two-dimensional array of light emitting elements and an array of micro lenses for receiving light emitted by the light emitting elements. The light emitted by the light emitting elements that is shaped into parallel light beams by the micro lenses is then focused onto a value document 1 to be checked by means of an imaging lens.

JP2006 058488 A is concerned with an illumination optical device and projection type display device using the same and discloses a light source module having an LED array and two micro lens arrays. The micro lenses of the micro lens array are schematically shown in the drawings as biconvex lenses. The first micro lenses form an image of the LEDs in the second micro lenses. Further, the principal surface of second the micro lens array and the surface to be irradiated have nearly conjugate relation. Then, an image of the micro lens array is formed on the surface to be irradiated so as to provide an illuminance on a surface to be irradiated having a small irregularity.

JP2000 138796 A shows a document illuminating device having a lens array of spherical or aspherical convex lenses with the same focal lengths on a straight line.

### SUMMARY OF THE INVENTION

The object underlying the present invention is to provide a light source module capable of providing uniformly light intensity distribution for improving the image identifying performance of a validation apparatus using such light source module.

This object is achieved by the light source module according to claim 1.

Thus, present invention is to provide a validation apparatus having a specially designed light source module, capable of providing a uniformly light intensity distribution for improving the image identifying performance of the validation apparatus.

The light source module includes a plurality of light emitting units and a lens array. The light emitting units are arranged along a predetermined direction and each emitting lights. The lens array includes a plurality of lens units connected together along an axis parallel to the predetermined direction. The lens units respectively receive the lights emitted from the light emitting units. Each of the lens units has a convex surface intersecting with the direction of the light emitted from each the light emitting units. The convex surface is constituted by a first arc line rotated with respect to the axis. The convex surface further has a second arc line perpendicularly intersecting with the first arc line. The radius of curvature of the first arc line is longer than the radius of curvature of the second arc line.

In addition, the present invention provides a validation apparatus including the above-mentioned light source module and a detecting module for detecting the lights emitted from the light emitting units delivering through the lens units.

### BRIEF DESCRIPTION OF THE DRAWINGS

FIG. 1 is an exploded view showing a validation apparatus of the present invention;
FIG. 2 is an exploded view showing a light source module of the present invention;
FIG. 3 is a schematic view showing a lens unit of the present invention;
FIG. 4 is another schematic view showing the lens unit of the present invention;
FIG. 5 is a schematic view showing the light source module of the present invention;
FIG. 6A is a chart of light intensity distribution of a strip-shaped beam;
FIG. 6B is an expanded view of FIG. 6A;
FIG. 7 is sectional view showing the validation apparatus of the present invention; and
FIG. 8 is a schematic view showing when a valuable document is inserted into the validation apparatus.

### DETAILED DESCRIPTION OF THE INVENTION

A detailed description of the present invention will be made with reference to the accompanying drawings.

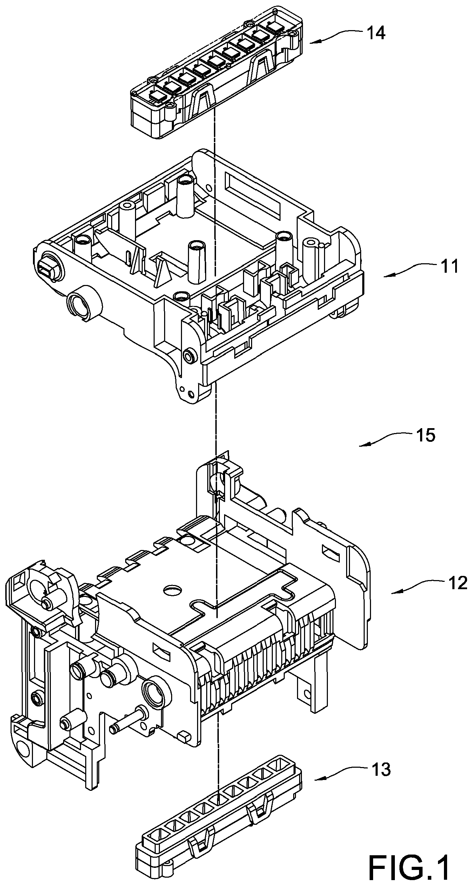

FIG. 1 shows a validation apparatus according to an embodiment of the present invention. The validation apparatus mainly includes an upper base 11, a lower base 12, a light source module 13 and a detecting module 14. A tunnel 15 is defined by the upper base 11 and the lower base 12 for delivering the valuable documents or the plastic payment cards like credit cards. The light source module 13 is embedded in the lower base 12 for emitting light into the tunnel 15. The detecting module 14 is embedded in the upper base 11 and correspondingly located over the light source module 13, for receiving the light emitted from the light source module 13.

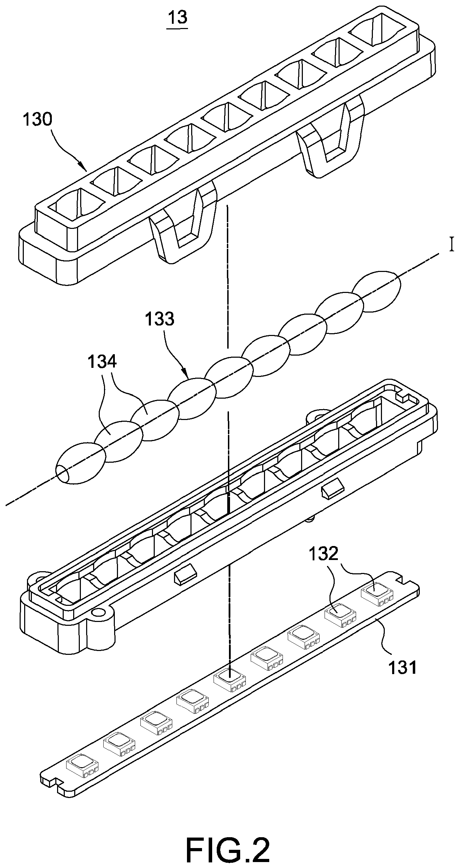

As FIG. 2 shows, the light source module 13 includes a housing 130, a circuit board 131, a plurality of light emitting units 132 and a lens array 133. The lens array 133 is installed inside the housing 130. The light emitting units 132 are arranged along a predetermined direction on the circuit board 131 and electrically connected to the circuit board 131. Each of the light emitting units 132 is used for emitting light. More specifically, the light emitting units 132 are light emitting diodes. In practical use, the light emitting units 132 can also be light bulbs, light tubes or laser diodes. A plurality of holes are formed respectively on the upper side and the lower side of the housing 130 for delivering the light emitted from the light emitting units 132. Lights emitted from the light emitting units 132 can pass through those holes and reach the lens array 133 inside the housing 130. The lens array 133 has a plurality of lens units 134 connected together along an axis (I) parallel to the predetermined direction. Each of the lens units 134 is used for receiving the light emitted from the corresponding light emitting unit 132. In practical manufacturing, the lens units 134 of the lens array 133 are one-piece formed by injection molding. In this embodiment, the number of the lens units 134 of the lens array 133 is nine, but not limited in practical use.

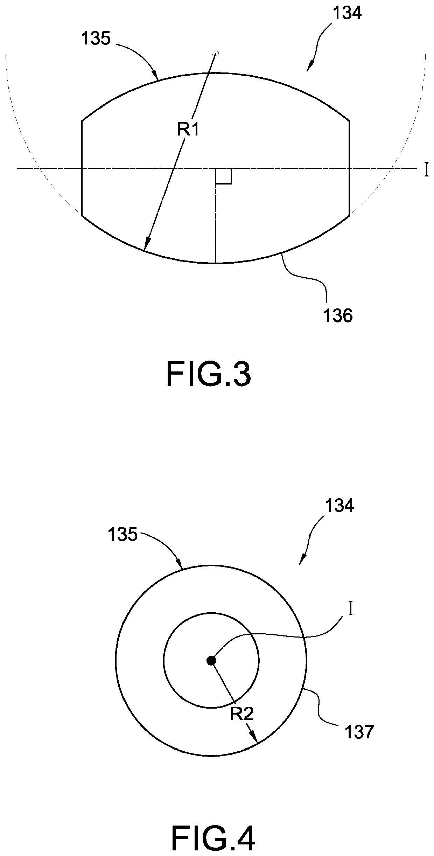

As FIG. 3 shows, each of the lens units 134 has a convex surface 135. The convex surface 135 is constituted by a first arc line 136 completely rotated with respect to the axis I. The first arc line 136 is coplanar with the axis I. As FIG. 3 & 4 show, the convex surface 135 also has a second arc line 137 perpendicularly intersecting with the first arc line 136. The radius of curvature R1 of the first arc line 136 is longer than the radius of curvature R2 of the second arc line 137. More specifically, the radius of curvature R1 is within a range between 2.5mm and 20mm. The radius of curvature R2 is within a range between 0.5mm and 5mm.

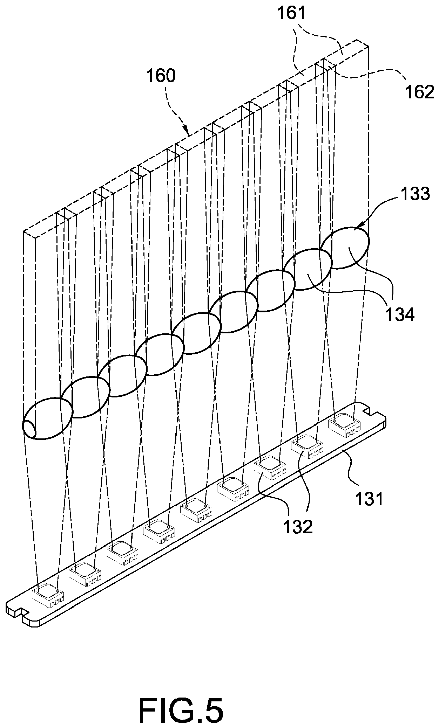

As FIG. 5 shows, the original distribution of light emitted form each of the light emitting units 132 is of circular shape. After the lens units 134, the light is beam-shaped into a strip-shaped beam 161. The width of the strip-shaped beam 161 is smaller than the radius of the original distribution of the light emitted form each of the light emitting units 132. The light intensity within each of the strip-shaped beam 161 is substantially uniform. Each of the strip-shaped beams 161 is overlapped by the adjacent strip-shaped beam 161. Thus, an overlapped portion 162 is formed between two adjacent strip-shaped beams 161. In ideal situation, the two adjacent strip-shaped beams 161 are just connected without any overlapping. All the strip-shaped beams 161 are connected forming a long-striped scanning light beam 160.

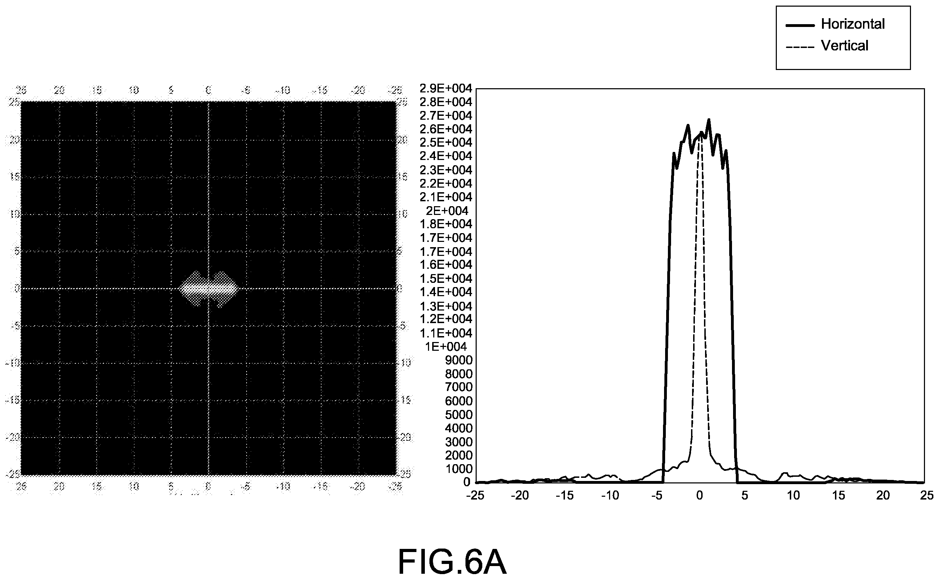

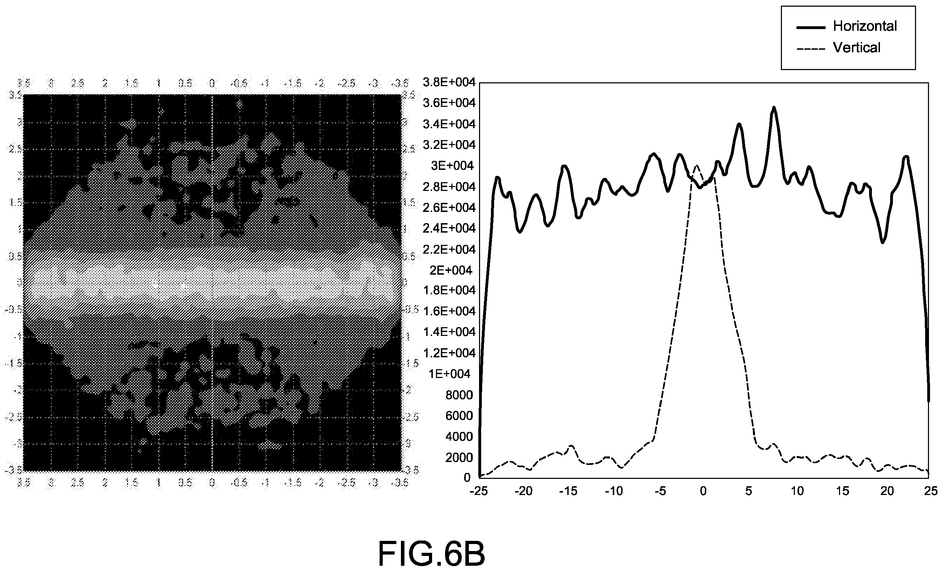

FIG. 6A and FIG. 6B are a light intensity distribution chart and a partially expanded view thereof, respectively. The solid line represents the light intensity distribution along the longitudinal direction of the strip-shaped beam 161. The dash line represents the light intensity distribution along the transverse direction of the strip-shaped beam 161. As can be seen in FIG. 6A and FIG. 6B, the light intensity distributions along the longitudinal and the transverse directions of the strip-shaped beam 161 are both substantially uniform.

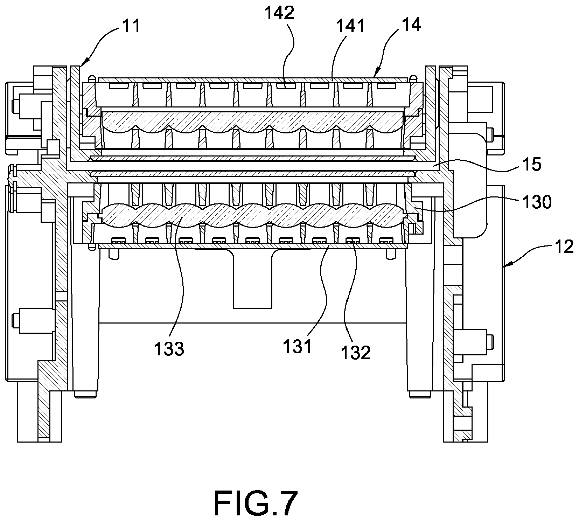

As FIG. 7 shows, the detecting module 14 is arranged above the tunnel 15 for receiving the scanning light beam 160, which is emitted from light emitting units 132 and passes through the lens units 133 and the tunnel 15. More specifically, the detecting module 14 includes a circuit board 141 and a plurality of detecting devices 142. The detecting devices 142 are arranged on the circuit board 141 and electrically connected to the circuit board 141. The detecting devices 142 can be photo diodes, photo transistors, charge-coupled devices (CCD) or complementary metal-oxide semiconductor (CMOS) sensor.

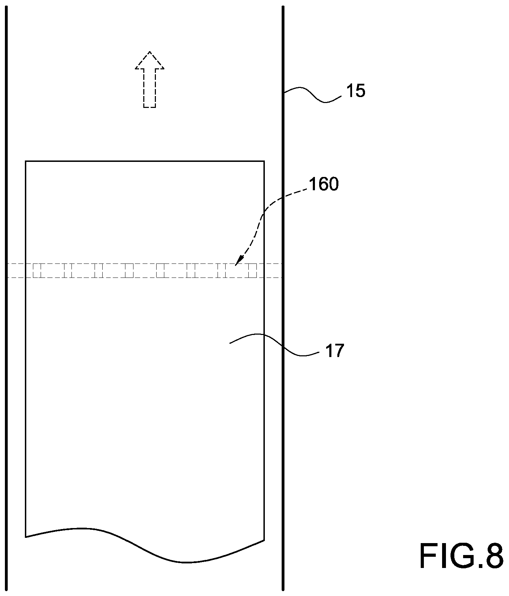

As FIG. 7 and FIG. 8 show, in practical use, when a valuable document 17 is inserted into the tunnel 15, the scanning light beam 160 emitted from the light source module 13 will illuminate the valuable document 17. The direction of the scanning light beam 17 is perpendicular to the moving direction of the valuable document 17. The scanning light beam 160 is then received by the detecting module 14. The signal modulation to the scanning light beam 160 can be intensity modulation, polarization modulation, wavelength modulation and propagating direction modulation. In conclusion, the validation apparatus can obtain clear image of the valuable documents or the plastic payment cards for further validation process. Thus, the security features on the valuable documents can be clearly identified to avoid frauds.

Since the width of the strip-shaped beam 161 is smaller than the radius of the original distribution of the light emitted from the light emitting units 132, the image resolution performance of the validation apparatus is improved along the moving direction of the valuable documents. Since the light intensity of the strip-shaped beam 161 is substantially uniform along its longitudinal direction, the resolution of the image captured by the detecting module 14 is improved. The positional tolerance of the valuable documents along a direction perpendicular to its moving direction in the tunnel 15 can be broadened and the signal-to-noise ratio can be increased.

## Claims

1. A light source module (13) comprising:
- a plurality of light emitting units (132) arranged along a predetermined direction and each emitting light; and
- a lens array (133) comprising a plurality of lens units (134);
- wherein the lens units (134) are connected together along an axis (I) parallel to the predetermined direction, and respectively receive the lights emitted from the light emitting units (132), each of the lens units (134) comprises a convex surface (135) intersecting with the direction of the light emitted from each the light emitting units (132), and **characterized in that** the convex surface (135) being constituted by a first arc line (136) rotated with respect to the axis (I),
wherein the convex surface (135) further comprising a second arc line (137) orthogonal to the first arc line (136), and the radius of curvature of the first arc line (136) is longer than the radius of curvature of the second arc line (137), so that the lens units (134) beam-shape the light emitted from the light emitting units (132) into a strip-shaped beam (161) and provide a long-striped scanning light beam (160).

2. The light source module as claim 1, wherein the convex surface (135) is constituted by a first arc line (136) completely rotated with respect to the axis (I), and the convex surface (135) is a closed surface.

3. The light source module as claim 1, wherein the lens units (134) of the lens array (133) are of one pieced form.

4. The light source module as claim 1, further comprising a circuit board (131) for arranging the light emitting units (132) and electrically connecting the light emitting units (132).

5. A validation apparatus, comprising:
- a light source module (13) according to any one of the preceding claims, and
- a detecting module for detecting the lights emitted from the light emitting units (132) delivered through the lens units (134).

## Patentansprüche

1. Lichtquellenmodul (13), das Folgendes umfasst:
- mehrere Leuchteinheiten (132), die entlang einer vorgegebenen Richtung angeordnet sind und wovon jede Licht ausstrahlt; und
- eine Linsenanordnung (133), die mehrere Linseneinheiten (134) umfasst;
wobei
die Linseneinheiten (134) entlang einer Achse (I) parallel zu der vorgegebenen Richtung miteinander verbunden sind und jeweils das Licht empfangen, das von den Leuchteinheiten (132) ausgestrahlt wird,
jede der Linseneinheiten (134) eine konvexe Oberfläche (135) aufweist, die die Richtung des Lichts, das von jeder der Leuchteinheiten (132) ausgestrahlt wird, schneidet,
**dadurch gekennzeichnet, dass** die konvexe Oberfläche (135) durch eine erste Bogenlinie (136), die in Bezug auf die Achse (I) gedreht ist, gebildet wird,
wobei die konvexe Oberfläche (135) ferner eine zweite Bogenlinie (137) senkrecht zu der ersten Bogenlinie (136) umfasst und wobei der Krümmungsradius der ersten Bogenlinie (136) länger als der Krümmungsradius der zweiten Bogenlinie (137) ist, so dass die Linseneinheiten (134) das Licht, das von den Leuchteinheiten (132) ausgestrahlt wird, strahlförmig in einen streifenförmigen Strahl (161) formen und einen längsgestreiften Lichtstrahl (160) zum Abtasten bereitstellen.

2. Lichtquellenmodul nach Anspruch 1, wobei die konvexe Oberfläche (135) durch eine erste Bogenlinie (136) gebildet ist, die in Bezug auf die Achse (I) vollständig gedreht ist, und wobei die konvexe Oberfläche (135) eine geschlossene Oberfläche ist.

3. Lichtquellenmodul nach Anspruch 1, wobei die Linseneinheiten (134) der Linsenanordnung (133) einteilig ausgebildet sind.

4. Lichtquellenmodul nach Anspruch 1, das ferner eine Leiterplatte (131) umfasst, um die Leuchteinheiten (132) anzuordnen und um die Leuchteinheiten (132) elektrisch anzuschließen.

5. Prüfvorrichtung, die Folgendes umfasst:
- ein Lichtquellenmodul (13) nach einem der vorhergehenden Ansprüche, und
- ein Detektionsmodul zum Detektieren von Licht, das von den Leuchteinheiten (132) ausgestrahlt wird, das durch die Linseneinheiten (134) zugeführt wird.

## Revendications

1. Module de source lumineuse (13) comprenant :
- une pluralité d'unités émettrices de lumière (132) disposées le long d'une direction prédéterminée et émettant chacune de la lumière ; et
- une matrice de lentilles (133) comprenant une pluralité d'unités de lentilles (134) ;
- dans lequel les unités de lentilles (134) sont connectés conjointement le long d'un axe (I) parallèle à la direction prédéterminée et reçoivent respectivement la lumière émise par les unités émettrices de lumière (132),
chacune des unités de lentilles (134) comprend une surface convexe (135) coupant en intersection la direction de la lumière émise à partir de chacune des unités émettrices de lumière (132), et **caractérisé en ce que** la surface convexe (135) est constituée par une première ligne arquée (136) tournée rotativement par rapport à l'axe (I),
dans lequel la surface convexe (135) comprend en outre une seconde ligne arquée (137) orthogonale à la première ligne arquée (136) et le rayon de courbure de la première ligne arquée (136) est plus long que le rayon de courbure de la seconde ligne arquée (137), de sorte que les unités de lentilles (134) façonnent en faisceau la lumière émise par les unités émettrices de lumière (132) en un faisceau en forme de bande (161) et fournissent un faisceau lumineux de balayage à longue bande (160).

2. Module de source lumineuse selon la revendication 1, dans lequel la surface convexe (135) est constituée par une première ligne arquée (136) complètement tournée en rotation par rapport à l'axe (I) et la surface convexe (135) est une surface fermée.

3. Module de source lumineuse selon la revendication 1, dans lequel les unités de lentilles (134) de la matrice de lentilles (133) sont en forme d'éléments assemblés.

4. Module de source lumineuse selon la revendication 1, comprenant en outre une carte de circuit imprimé 131 pour disposer les unités émettrices de lumière (132) et connecter électriquement les unités émettrices de lumière (132).

5. Dispositif de validation, comprenant :
- un module de source lumineuse (13) selon une quelconque des revendications précédentes et
- un module de détection pour détecter la lumière émise par les unités émettrices de lumière (132) délivrée à travers les unités de lentilles (134).
